# FASCICULE DE BREVET EUROPEEN

(11) **EP 1 280 415 B1**
(45) Date de publication et mention de la délivrance du brevet: **21.04.2010**
(21) Numéro de dépôt: 01929738.1
(22) Date de dépôt: 27.04.2001
(51) Int. Cl.: A23G 3/00, A23L 1/36

(54) **PROCEDE DE REALISATION DE CONFISERIES EN VRAC**
VERFAHREN ZUR HERSTELLUNG VON KONFEKTPRODUKTEN
METHOD FOR PRODUCING BULK CONFECTIONERY

(30) Priorité: 28.04.2000 FR 0005490
(43) Date de publication de la demande: 05.02.2003
(73) Titulaire: MARS, INCORPORATED, McLean, VA 22101-3383 (US)
(72) Inventeur: SCHEVERS, Martinus, Josephus, NL-5482 GN SCHIJNDEL (NL); VERHAGEN, Rob, Cornelis, 5467 JA VEGHEL (NL); LABBE, Guy, Gaston, Louis, Joseph, F-67590 Schweighouse/Moder (FR); FLAMBEAU, Michel, Jacques, Charles, F-67000 Strasbourg (FR); LEHERLE, Magali, Chester CH1 4HA (GB)
(74) Mandataire: Hirsch & Associés
(86) Numéro de dépôt international: PCT/FR2001/001305
(87) Numéro de publication internationale: WO 2001/082717

(56) Documents cités:
- FR-A- 2 508 280
- FR-A- 2 689 730
- FR-A- 2 697 974
- FR-A- 2 731 876
- US-A- 4 663 175
- US-A- 4 961 943
- US-A- 5 424 085
- PATENT ABSTRACTS OF JAPAN vol. 013, no. 021 (C-560), 18 janvier 1989 (1989-01-18) & JP 63 226250 A (WAKOUDOU KK), 20 septembre 1988 (1988-09-20)

## Description

L'invention concerne les confiseries chocolatées incluant des particules enrobées.

On connaît des confiseries chocolatées vendues en vrac telles que celles de la marque « M&M's ». Il s'agit de cacahuètes recouvertes de chocolat et d'une couche externe sucrée colorée. Pour fabriquer ces confiseries, on enrobe les cacahuètes avec une préparation de chocolat liquide, puis on solidifie la couche ainsi formée. On met ensuite en place la couche sucrée externe et on la polit.

Toutefois, cette méthode présente quelques imperfections. Ainsi, les confiseries obtenues sont relativement dures sous la dent. Or, si l'on veut les incorporer à une préparation telle qu'une crème glacée ou un biscuit, la différence de dureté entre la confiserie et le reste de la préparation produit une sensation que le consommateur peut trouver désagréable.

En outre, cette méthode s'avère difficile à appliquer pour enrober des centres de plus petites dimensions que les cacahuètes. En effet, appliquer du chocolat liquide sur des particules légères et de petites tailles est délicat car la composition d'enrobage doit présenter certaines particularités en termes de viscosité. Il faut dès lors modifier la composition du chocolat liquide et le produit obtenu n'est pas satisfaisant pour le consommateur, voire non conforme à la législation sur les produits chocolatés.

Ajoutons que la solution consistant à concasser des confiseries M&M's pour en réduire la taille donne un résultat esthétique inacceptable puisqu'il n'a rien à voir avec les mêmes confiseries en réduction.

Le document FR 2 689 730 décrit un procédé pour de fabrication de ganache, plus spécialement destinée à la fabrication de truffes au chocolat, dans lequel on mélange du chocolat de couverture, de la crème laitière et du sucre. Le mélange et le malaxage sont poursuivis jusqu'à l'obtention d'un état pâteux et d'une homogénéité substantielle du chocolat de couverture pour partie chauffée et à l'état liquide et pour partie à l'état solide et en morceaux ; et de la crème laitière modérément chauffée. On laisse la ganache se cristalliser à faible température ; On conforme des morceaux de ganache selon la forme des truffes à fabriquer ; On enrobe les morceaux de ganache ainsi conformés de chocolat de couverture ; on surgèle les morceaux de ganache conformés et enrobés ; On laisse ces truffes semi-finies se décongeler, en atmosphère ambiante, jusqu'à obtenir en surface du chocolat de couverture une certaine condensation et enfin on poudre en surface les truffes semi-finies décongelées avec de la poudre de cacao, celle-ci adhérant sur la surface ainsi humide du chocolat de couverture.

Du document US-4961943 des produits sont connus comprenant des centres de fruits secs, enrobés avec des enrobages croustillants générés par une alternance de couches de matière grasse avec des couches de particules sèches.

Un but de l'invention est de fournir un procédé permettant de préparer des confiseries chocolatées de même type que celles connues, mais moins dures et éventuellement de plus petite taille.

En vue de la réalisation de ce but, on prévoit selon l'invention un procédé de préparation d'une confiserie chocolatée, dans lequel on enrobe au moins une particule en alternant des couches de liquide gras avec des couches de poudre comprenant du cacao comme défini dans la revendication 1.

Ainsi, chaque couche grasse sert de liant à la couche de poudre mise en place à sa suite et forme avec celle-ci une couche de chocolat. On constate que la confiserie obtenue est moins dure que celles connues. Elle fournit donc une sensation plus agréable lorsqu'on l'incorpore à une préparation telle qu'un biscuit, une crème glacée ou un yoghourt. De plus, le procédé se prête particulièrement bien à l'enrobage de particules de très petites tailles telles que des éclats de cacahuètes, et ce, sans enfreindre la législation sur les produits chocolatés.

L'invention pourra en outre présenter au moins l'une des caractéristiques suivantes :
- la particule est une fraction de noix ou noisette ;
- la particule est en cacahuète
- la particule a une plus grande dimension inférieure ou égale à 5 mm, et de préférence inférieure ou égale à 3,5 mm ;
- il comprend l'étape de refroidir la particule enrobée ;
- on effectue l'enrobage, puis on refroidit la particule, puis on effectue à nouveau l'enrobage ;
- après l'enrobage de matière grasse et de poudre, on enrobe la particule avec une solution sucrée, de préférence colorée ; et/ou
- la confiserie est un produit en vrac comportant une multitude desdites particules enrobées.

On prévoit également selon l'invention une confiserie chocolatée fabriquée au moyen du procédé de l'invention.

On prévoit en outre selon l'invention un produit alimentaire comprenant des confiseries répandues dans le produit, ces confiseries ayant été fabriquées au moyen du procédé selon l'invention.

Ce produit pourra présenter l'une au moins des caractéristiques suivantes :
- le produit contient une substance liquide ou pâteuse ;
- il contient une crème glacée recevant les confiseries ; et/ou
- il contient une substance lactée recevant les confiseries.

D'autres caractéristiques et avantages de l'invention apparaîtront encore dans la description qui va suivre d'un mode préféré de mise en oeuvre de l'invention et de variantes données à titre d'exemples non limitatifs.

Dans le mode préféré de mise en oeuvre du procédé selon l'invention, on utilise pour constituer les particules dures, ou centres, des éclats de cacahuètes. Plus généralement, on utilise un élément quelconque de la famille des noix et noisettes (noisettes, noix de pécan, noix, noix du Brésil, amande, noix de cajou, etc.), entier ou sous forme d'éclat.

Cet éclat, résultant du concassage d'une cacahuète, aura de préférence une plus grande dimension comprise entre 1,5 et 3,5 mm. Sa forme, bien entendu, est aléatoire. Mais les centres auront de préférence été criblés pour homogénéiser leur taille. Une fois enrobée et polie, la confiserie aura une plus grande dimension comprise entre 2 et 5 mm.

Les centres pourront être des éclats de cacahuètes ou autre noix qui, avant concassage, auront été recouverts avec une solution sucrée et séchés.

On pourra utiliser des éclats provenant de noix grillées à sec ou grillées en liaison avec un produit gras.

Durant le procédé, on enrobe les centres, disposés en vrac dans un récipient adapté, avec des couches alternées d'un liquide gras et d'une poudre comprenant du cacao. Pour cela, on projette le liquide et la poudre alternativement sur les centres. Ainsi, on met en place successivement une couche de liquide gras, une couche de poudre, une couche de liquide gras, une couche de poudre, etc. La couche de liquide gras incorpore la poudre au cacao et lui sert de liant. Elle lui permet de se fixer sur la particule à enrober.

La poudre au cacao pourra par exemple comprendre entre autres du sucre glace, de la poudre de lait écrémé, de la crème et du cacao en poudre. On pourra par exemple, donner à la poudre au cacao la composition suivante :
- sucre glace : 54%
- poudre de lait écrémé : 29%
- cacao en poudre : 14%
- additifs : 3%

Quant au liquide gras, on pourra lui donner une composition de beurre de cacao à 100%.

Après chaque application de la couche de poudre, on envoie de l'air froid sur les particules pour solidifier la couche de liquide gras, de préférence seulement après 4 ou 5 applications de liquide gras.

L'alternance de couches de liquide gras et de poudre conduit à un produit ayant la composition de chocolat souhaitée, par exemple, une composition très proche de celle des confiseries de la marque M&M's, mais présentant une texture assez molle. On met en place autant de couches que nécessaire pour obtenir l'épaisseur souhaitée. La dureté, assez modérée, du produit reste la même, que le produit soit consommé froid, glacé ou à température ambiante.

La composition de la poudre peut facilement être adaptée en fonction des préférences des consommateurs ou pour obtenir un goût ou une esthétique de produit particulière. On pourra ajouter au beurre de cacao d'autres graisses. Dans une certaine mesure, les performances du procédé selon l'invention ne sont pas altérées par une modification de la composition du liquide gras, de la poudre de cacao, et de la rhéologie du chocolat.

Le procédé selon l'invention permet de former des couches de chocolat sur des centres croquants, petits et légers qui, sinon, seraient difficiles à enrober avec un chocolat visqueux standard (présentant typiquement une viscosité Casson comprise entre 6 et 12 Pa). Une technique de revêtement traditionnel au moyen de chocolat liquide conduirait à une agglomération des centres les uns avec les autres, ce qui nuirait à un bon déroulement du procédé.

Après l'enrobage par les couches de liquide gras et de poudre au cacao, on enrobe les particules avec une ou plusieurs couches de sucre.

Pour réaliser la coquille externe de sucre dure, on projette une solution sucrée colorée sur les particules, puis on souffle de l'air sec pour solidifier la couche de sirop de sucre.

Ensuite, les particules sont polies pour leur donner un aspect lisse et brillant.

Dans des conditions préférées de mise en oeuvre, on effectue la préparation du produit dans un tambour ayant une vitesse de rotation de 23 tours par minute. Le volume du tambour est de 500 litres. Le liquide gras a été chauffé à une température comprise entre 40 et 50°C. L'air de refroidissement soufflé sur les particules a une température de 13°C mais une température inférieure, par exemple comprise entre 5 et 10°C, est envisageable et permet de réduire le temps de soufflage. La quantité de centres dans le récipient est par exemple de 75 kg. Une fois enrobé, le produit a une masse totale de 225 kg formée de granules en vrac.

Il est avantageux d'effectuer l'enrobage dans un récipient dont les faces internes en contact avec le produit sont recouvertes de caoutchouc : on améliore ainsi l'aspect du produit.

Il peut être envisagé d'imprimer sur les particules différents signes, par exemple, un logo, une marque ou un nom de produit.

On peut prévoir d'incorporer la confiserie en vrac de l'invention sur ou dans différents produits alimentaires tel qu'un produit glacé (crème glacée ou sorbet), un yoghourt, un biscuit, etc.

Le produit selon l'invention a lors de sa consommation le goût du chocolat et de la cacahuète qui a été enrobée.

Dans l'exemple qui vient d'être décrit, la confiserie est très proche des confiseries M&M's classiques en terme de recette, d'ingrédients, d'aspect et de goût, mais présente une taille beaucoup plus petite.

## Revendications

1. Procédé de préparation d'une confiserie chocolatée, **caractérisé en ce qu'**on enrobe au moins une particule de la famille des noix et noisettes avec du chocolat formé en alternant des couches de matière grasse contenant du beurre de cacao avec des couches de poudre comprenant du cacao sur ladite au moins une particule.

2. Procédé de préparation d'une confiserie chocolatée selon la revendication 1, **caractérisé en ce que** la particule est une fraction de noix ou noisette.

3. Procédé de préparation d'une confiserie chocolatée selon l'une des revendications 1 à. 2, **caractérisé en ce que** la particule est en cacahuète.

4. Procédé de préparation d'une confiserie chocolatée selon l'une des revendications 1 à 3, **caractérisé en ce que** la particule a une plus grande dimension inférieure ou égale à 5 mm.

5. Procédé de préparation d'une confiserie chocolatée, selon la revendication 1 à 4, **caractérisé en ce que** la particule a une plus grande dimension inférieure ou égale à 3,5 mm.

6. Procédé de préparation d'une confiserie chocolatée selon l'une des revendications 1 à 5, **caractérisé en ce qu'**il comprend l'étape de refroidir la particule enrobée.

7. Procédé de préparation d'une confiserie chocolatée selon l'une des revendications 1 à 6, **caractérisé en ce qu'**on effectue l'enrobage, puis on refroidit la particule, puis on effectue à nouveau l'enrobage.

8. Procédé de préparation d'une confiserie chocolatée selon l'une des revendications 6 ou 7, dans lequel le refroidissement de la particule comprend le fait de souffler de l'air sur la particule, l'air étant à une température inférieure ou égale à 13°C.

9. Procédé de préparation d'une confiserie chocolatée selon l'une des revendications 6 ou 7, dans lequel le refroidissement de la particule comprend le fait de souffler de l'air sur la particule, l'air étant à une température comprise entre 5°C et 10°C.

10. Procédé de préparation d'une confiserie chocolatée selon l'une des revendications 1 à 9, **caractérisé en ce que**, après l'enrobage de matière grasse et de poudre, on enrobe la particule avec une solution sucrée, de préférence colorée.

11. Procédé de préparation d'une confiserie chocolatée selon l'une des revendications 1 à 9, **caractérisé en ce que** la confiserie est un produit en vrac comportant une multitude desdites particules enrobées.

12. Confiserie chocolatée, **caractérisée en ce qu'**elle a été fabriquée au moyen du procédé selon l'une des revendications 1 à 11.

13. Produit alimentaire comprenant des confiseries répandues dans le produit, **caractérisé en ce que** les confiseries ont été fabriquées au moyen du procédé selon l'une des revendications 1 à 11.

14. Produit selon la revendication 13, **caractérisé en ce que** le produit contient une substance liquide ou pâteuse.

15. Produit selon l'une des revendications 13 à 14, **caractérisé en ce qu'**il contient une crème glacée recevant les confiseries.

16. Produit selon l'une des revendications 13 à 14, **caractérise en ce qu'**il contient une substance lactée recevant les confiseries.

## Claims

1. A method for preparing a chocolate-containing confectionery product, **characterised in that** at least one particle of the family of nuts and hazelnuts is coated with chocolate formed by alternating layers of fatty matter that contains cocoa butter with layers of powder comprising cocoa on said at least one particle.

2. The method for preparing a chocolate-containing confectionery product according to claim 1, **characterised in that** the particle is a fraction of a nut or hazelnut.

3. The method for preparing a chocolate-containing confectionery product according to one of claims 1-2, **characterised in that** the particle is of peanut.

4. The method for preparing a chocolate-containing confectionery product according to one of claims 1-3, **characterised in that** the particle has a major dimension less than or equal to 5 mm.

5. The method for preparing a chocolate-containing confectionery product according to one of claims 1-4, **characterised in that** the particle has a major dimension less than or equal to 3.5 mm.

6. The method for preparing a chocolate-containing confectionery product according to one of claims 1-5, **characterised in that** it comprises a step of cooling the coated particle.

7. The method for preparing a chocolate-containing confectionery product according to one of claims 1-6, **characterised in that** coating is carried out followed by cooling of the particle, after which coating is again performed.

8. The method for preparing a chocolate-containing confectionery product according to one of claims 6 or 7, in which the cooling of the particle includes blowing air onto the particle, the air being at a temperature less than or equal to 13°C.

9. The method for preparing a chocolate-containing confectionery product according to one of claims 6 or 7, in which the cooling of the particle includes blowing air onto the particle, the air being at a temperature comprised between 5°C and 10°C.

10. The method for preparing a chocolate-containing confectionery product according to one of claims 1-9, **characterised in that**, after coating with fatty matter and powder, the particle is coated with a sugar containing solution, preferably colored.

11. The method for preparing a chocolate-containing confectionery product according to one of claims 1-9, **characterised in that** the confectionery product is a loose product comprising a multitude of said coated particles.

12. A chocolate-containing confectionery product **characterised in that** it is produced by a method according to one of claims 1 to 11.

13. A food product comprising confectionery products distributed within the product, **characterised in that** the confectionery products have been produced by a method according to one of claims 1 to 11.

14. The food product according to claim 13, **characterised in that** the product contains a liquid or pasty substance.

15. The food product according to one of claims 13-14, **characterised in that** it contains an ice-cream receiving the confectionery products.

16. The food product according to one of claims 13 to 14, **characterised in that** it contains a milk substance receiving the confectionery products.

## Patentansprüche

1. Verfahren zum Zubereiten einer Schokoladesüßigkeit, **dadurch gekennzeichnet, dass** man mindestens ein Teilchen der Familie der Walnüsse und Haselnüsse mit Schokolade überzieht, die durch Abwechseln von Schichten aus Fett, die Kakaobutter enthalten, mit Pulverschichten, die Kakao enthalten, auf dem mindestens einem Teilchen gebildet wird.

2. Verfahren zum Zubereiten einer Schokoladesüßigkeit nach Anspruch 1, **dadurch gekennzeichnet, dass** das Teilchen ein Walnuss- oder Haselnussbruchstück ist.

3. Verfahren zum Zubereiten einer Schokoladesüßigkeit nach einem der Ansprüche 1 bis 2, **dadurch gekennzeichnet, dass** das Teilchen eine Erdnuss ist.

4. Verfahren zum Zubereiten einer Schokoladesüßigkeit nach einem der Ansprüche 1 bis 3, **dadurch gekennzeichnet, dass** das Teilchen ein größeres Maß kleiner oder gleich 5 mm hat.

5. Verfahren zum Zubereiten einer Schokoladesüßigkeit nach Anspruch 1 bis 4, **dadurch gekennzeichnet, dass** das Teilchen ein größeres Maß kleiner oder gleich 3,5 mm hat.

6. Verfahren zum Zubereiten einer Schokoladesüßigkeit nach einem der Ansprüche 1 bis 5, **dadurch gekennzeichnet, dass** es den Schritt des Abkühlens des beschichteten Teilchens umfasst.

7. Verfahren zum Zubereiten einer Schokoladesüßigkeit nach einem der Ansprüche 1 bis 6, **dadurch gekennzeichnet, dass** man das Beschichten ausführt und das Teilchen dann abkühlt und ein neues Beschichten ausführt.

8. Verfahren zum Zubereiten einer Schokoladesüßigkeit nach einem der Ansprüche 6 oder 7, bei dem das Abkühlen des Teilchens die Tatsache aufweist, dass Luft auf das Teilchen geblasen wird, wobei die Luft eine Temperatur kleiner oder gleich als 13 °C aufweist.

9. Verfahren zum Zubereiten einer Schokoladesüßigkeit nach einem der Ansprüche 6 oder 7, bei dem das Abkühlen des Teilchens die Tatsache aufweist, dass Luft auf das Teilchen geblasen wird, wobei die Luft eine Temperatur zwischen 5 °C und 10 °C aufweist.

10. Verfahren zum Zubereiten einer Schokoladesüßigkeit nach einem der Ansprüche 1 bis 9, **dadurch gekennzeichnet, dass** man das Teilchen nach dem Beschichten mit Fett und Pulver mit einer Zuckerlösung überzieht, die vorzugsweise farbig ist.

11. Verfahren zum Zubereiten einer Schokoladesüßigkeit nach einem der Ansprüche 1 bis 9, **dadurch gekennzeichnet, dass** die Süßigkeit ein loses Produkt ist, das eine Vielzahl der beschichteten Teilchen aufweist.

12. Süßigkeit, **dadurch gekennzeichnet, dass** sie mittels des Verfahrens nach einem der Ansprüche 1 bis 11 hergestellt wurde.

13. Nahrungsmittel, das Süßigkeiten aufweist, die in dem Produkt verteilt sind, **dadurch gekennzeichnet, dass** die Süßigkeiten mittels des Verfahrens nach einem der Ansprüche 1 bis 11 hergestellt wurden.

14. Nahrungsmittel nach Anspruch 13, **dadurch gekennzeichnet, dass** das Produkt eine flüssige oder pastenartige Substanz enthält.

15. Nahrungsmittel nach einem der Ansprüche 13 bis 14, **dadurch gekennzeichnet, dass** es eine Eiscreme aufweist, die die Süßigkeiten erhält.

16. Nahrungsmittel nach einem der Ansprüche 13 bis 14, **dadurch gekennzeichnet, dass** es eine Milchsubstanz enthält, die die Süßigkeiten erhält.
